# EUROPÄISCHE PATENTANMELDUNG

(11) **EP 0 861 985 A2**
(43) Veröffentlichungstag der Anmeldung: **02.09.1998**
(21) Anmeldenummer: 98101812.0
(22) Anmeldetag: 03.02.1998
(51) Int. Cl.: F15D 1/00

(54) **Vorrichtung zur vertikalen Temperaturschichtung eines Fluids in einem Speicherbehälter**

(30) Priorität: 10.02.1997 DE 19704914
(71) Anmelder: Sailer, Wolfgang, 89601 Schelklingen (DE); Sailer, Roland, 89601 Schelklingen (DE)
(72) Erfinder: Sailer, Wolfgang, 89601 Schelklingen (DE); Sailer, Roland, 89601 Schelklingen (DE)
(74) Vertreter: Weber, Gerhard

(57) **Zusammenfassung**

Für eine zum Einsatz in Fluid-Speicherbehältern mit vertikaler Temperaturschichtung des eingelagerten Fluids geeigneten und vorgesehenen Vorrichtung zur vertikalen Temperaturschichtung des Fluids wird vorgeschlagen, an der Vorrichtung eine Mehrzahl von seitlich von einem Hauptstromkanal abführenden Ausströmkanälen auszubilden, die gegenüber der Hauptströmungsrichtung im Hauptstromkanal eine Richtungsumkehr der Strömungsrichtung von mehr als 90°, vorzugsweise zwischen 120° und 160° bewirken. Die dermaßen gestalteten Ausströmkanäle verhindern durch einen thermischen Sifoneffekt eine Durchmischung von erwärmtem aufsteigendem Fluid im Hauptstromkanal mit umgebendem kälterem Fluid. Bevorzugt sind die Ausströmkanäle zwischen jeweils zwei von einer Mehrzahl übereinander angeordneter, rotationssymmetrischer Leitelemente gebildet. Durch eine Umlenkung der Strömungsrichtung innerhalb des Verlaufs der Ausströmkanäle bis zu einer annähernd horizontalen Strömungsrichtung am Ausgang der Ausströmkanäle wird eine besonders störungsarme Einschichtung eines im Hauptstromkanal aufsteigenden Fluids erreicht.

## Beschreibung

Die Erfindung betrifft eine Vorrichtung zur vertikalen Temperaturschichtung eines Fluids in einem Speicherbehälter.

Zur effektiven Nutzung von Wärmeenergie sind Pufferspeicher bekannt, in welche Wärmeenergie durch Aufheizen eines Fluids eingebracht und durch Abkühlung von erwärmtem Fluid wieder entnommen wird. Der Einsatz eines Pufferspeichers ist insbesondere von Bedeutung bei der Ausnutzung von Sonnenenergie über Solarkollektoren. Ferner können durch die Pufferung die Einschaltintervalle von brennstoffbetriebenen Wärmeerzeugern verlängert und dadurch deren Wirkungsgrad erhöht werden. Als Fluid dient typischerweise Wasser, gegebenenfalls mit siedepunkterhöhenden und/oder gefrierpunktsenkenden Zusätzen.

Es ist bekannt, daß die Energieausnutzung verbessert wird, wenn im Speicherbehälter eine Temperaturschichtung des Fluids unter Ausnutzung der Temperaturabhängigkeit der Fluiddichte erreicht wird.

In der DE 28 04 456 A1 ist ein Wärmespeicher beschrieben, der mehrere in größerem Abstand übereinander angeordnete, sich nach oben verjüngende kegelstumpfförmige Elemente enthält. Die Elemente trennen jeweils dicke Wärmeschichten voneinander und bewirken so eine Schichtbildung im Speicher. Die äußeren Ränder der Elemente reichen bis dicht an die Behälterwand.

Am Behältergrund zugeführte Wärmeenergie führt zu einem vertikal nach oben gerichteten Fluidstrom durch innere Öffnungen der Elemente, zu dessen Ausgleich ein Strom abgekühlten Fluids durch die Ringspalte zwischen Behälterwand und den Elementen nach unten gerichtet ist. Der nach oben gerichtete Strom erwärmten Fluids führt durch Wasserschichten niedrigerer Temperatur, wobei sich durch den direkten Kontakt mit diesen Schichten eine teilweise Vermischung ergibt, was in entsprechender Weise auch bei dem abwärts gerichteten Strom an der Behälterwand gilt. Die an sich nicht erwünschte Vermischung mit durchströmten Schichten und die turbulente Einspeicherung in die grob unterteilte Schichtstruktur führt zu einer unbefriedigenden Nutzbarkeit der zugeführten Wärmeenergie.

Bekannt ist ferner, einen aufwärts gerichteten Fluidstrom in einem Steigrohr zu führen, das eine Mehrzahl seitlicher Auslaßöffnungen in verschiedener Höhe aufweist. Der Fluidstrom im Rohr führt aber an den Auslaßöffnungen sowohl beim Vorbeiströmen an kälteren Schichten als auch beim Ausströmen in temperaturgleichen Schichthöhen zu turbulenten Vermischungen, welche die gewünschte Schichtung beeinträchtigen.

In der DE 195 10 291 A1 sind die seitlichen Auslässe eines solchen Steigrohrs so gestaltet, daß der seitliche Austritt aus der Hauptströmung durch Prallflächen, welche eine Umlenkung seitlich ausströmenden Fluids nach unten bewirken, gebremst und die eine durch Strömungsträgheit und Druck der nachströmenden Fluidsäule verursachte Einströmung kälteren Fluids in Schichten wärmeren Fluids verhindert wird. Der Austritt in der Schicht ungefähr gleicher Dichte wie das erwärmte Fluid führt aber durch Turbulenzen wieder zu einer nachteiligen Störung der Schichtung.

In der DE 39 05 874 C2 ist eine Anordnung beschrieben, bei welcher ein Steigrohr an mehreren seitlichen Auslässen mit Klappenventilen versehen ist, welche eine Verwirbelung und Durchmischung mit durchströmten Schichten verhindern sollen. Durch den mechanischen Aufwand sowie dessen Verschleißanfälligkeit ist eine solche Anordnung insbesondere zum Einbau in einen geschlossenen, später kaum noch zugänglichen Speicherbehälter ungünstig.

Aus der DE 27 22 888 A1 ist eine Anordnung mit einem über einen Sonnenkollektor von oben gespeisten Schichtrohr mit seitlichen Öffnungen bekannt.

Der Erfindung liegt die Aufgabe zugrunde, eine Vorrichtung zur Temperaturschichtung eines Fluids in einem Speicher anzugeben, welche durch störungsarme Einschichtung eine hohe Energieausnutzung ermöglicht.

Die Erfindung ist im Patentanspruch 1 beschrieben. Die Unteransprüche enthalten vorteilhafte Ausgestaltungen und Weiterbildungen der Erfindung.

Durch die Umkehr der Strömungsrichtung in Verbindung mit der Ausbildung der Auslässe als Ausströmkanäle ergibt sich ein thermischer Sifoneffekt, der bei einer aufsteigenden Hauptströmung eine Ausströmung in Höhe kälterer umgebener Fluidschichten hemmt und damit einen Transport des aufsteigenden Fluids in die umgebende Schicht annähernd gleicher Temperatur unterstüzt. Die Ausbildung der Auslässe als Ausströmkanäle führt darüber hinaus zu einer Beruhigung von an den Eingängen der Ausströmkanäle evtl. entstehenden Turbulenzen und zu einem ruhigen im wesentlichen laminaren Strömungsbild an den Ausgängen der Ausströmkanäle.

Bei einer bevorzugten Ausführungsform mit im Verlauf der Ausströmkanäle zunehmendem Strömungsquerschnitt wird zudem die Strömungsgeschwindigkeit bis zum Ausgang der Ausströmkanäle deutlich verringert und so eine Verwirbelung der Temperaturschichtung des Fluids im Speicherbehälter vermieden. Besonders vorteilhaft ist eine Umlenkung der Strömungsrichtung im Verlauf der Ausströmkanäle von einer anfänglich gegenüber der Hauptströmungsrichtung im Hauptstromkanal umgekehrten Strömungsrichtung zu einer im wesentlichen horizontalen und damit schichtparallelen Strömungsrichtung am Ausgang der Ausströmkanäle.

Die erfindungsgemäße Vorrichtung ist sowohl für aufsteigende als auch für absinkende Fluidströme im Hauptstromkanal geeignet, wobei die Geometrie der Vorrichtung eine Hauptströmungsrichtung vorgibt. Im folgenden werden, soweit sich aus dem Zusammenhang nichts anderes ergibt, der Einfachheit halber lediglich Vorrichtungen mit von unten nach oben gerichteter Hauptströmungsrichtung behandelt. Vorrichtungen mit nach unten gerichteter Hauptströmungsrichtung im Hauptstromkanal ergeben sich daraus in analoger Weise durch 180°-Drehung der richtungswesentlichen Merkmale und Eigenschaften der Vorrichtung.

Die Richtungsumkehr bei Ausströmen vom Fluid aus dem Hauptstromkanal durch die Ausströmkanäle soll größer als 90° sein und beträgt vorzugsweise 120° bis 160°. Zur Erzielung ausreichender fluidleitender Eigenschaften mit einer Fluidführung in einer beabsichtigten Strömungsrichtung weisen die Ausströmkanäle eine Mindestlänge auf, welche sich an der Geometrie der gesamten Vorrichtung und dem maximal durch die Vorrichtung zu transportierenden Fluidstrom orientiert und beispielsweise mindestens gleich 3 cm ist. Eine Dimensionierungsrichtlinie für die Ausströmkanäle kann ferner dadurch gegeben sein, daß die radiale Erstreckung der Ausströmkanäle mindestens gleich dem halben Radius des Hauptstromkanals ist, oder daß die Strömungslänge der Ausströmkanäle mindestens doppelt so groß ist wie die geringste Höhe der Ausströmkanäle.

Da die Wärmeenergiespeicherung hauptsächlich in dem temperaturgeschichteten Fluid außerhalb des Hauptstromkanals erfolgen soll, ist die radiale Dimension der Ausströmkanäle auf maximal 2/3 des Radius des Speicherbehälters begrenzt. Durch Ausbildung der Strömungskanäle mit radial zunehmendem Strömungsquerschnitt kann die Ausströmgeschwindigkeit am Ausgang der Strömungskanäle deutlich reduziert werden, so daß eine Störung der Temperaturschichtung des umgebenden Fluids weiter stark verringert wird. Bevorzugt ist dabei eine Ausführung der Strömungskanäle, bei welcher diese umlaufend rotationssymmetrisch ausgebildet sind. Die Strömungskanäle bilden dann gleichzeitig eine rohrzylindrische Wärmeisolierschicht zwischen dem im Hauptstromkanal aufströmenden Fluid und den umgebenden kälteren Fluidschichten.

Besonders vorteilhaft für die temperaturrichtige und verwirbelungsarme Einschichtung eines erwärmten, im Hauptstromkanal aufströmenden Fluids ist eine Ausbildung der Ausströmkanäle mit einer Umlenkung der Strömungsrichtung im Verlauf der Strömungskanäle in der Weise, daß ausströmendes Fluid von einer anfänglich stärker gegen die Horizontale nach unten geneigten anfänglichen Strömungsrichtung im Verlauf der Ausströmkanäle umgelenkt wird in eine annähernd horizontale und damit schichtparallele Ausströmrichtung an den Ausgängen der Ausströmkanäle. Die Richtungsumlenkung innerhalb der Strömungskanäle kann dabei sowohl gestuft als auch bevorzugt kontinuierlich erfolgen.

Eine bevorzugte Ausführungsform der Erfindung sieht für die Vorrichtung zur Einspeicherung von im Hauptstromkanal aufströmendem Fluid eine Mehrzahl von in Hauptströmungsrichtung dicht aufeinanderfolgenden beabstandeten Leitelementen vor. Die Leitelemente sind vorzugsweise rotationssymmetrisch ausgebildet. Innere zentrale Öffnungen der Leitelemente bilden vorteilhafterweise gleichzeitig eine Vorgabe und Begrenzung für den vertikalen Hauptstromkanal. Die Ausströmkanäle sind vorteilhafterweise durch gegenüberliegende Leitflächen aufeinanderfolgender Leitelemente gebildet. Die Leitelemte zeigen jeweils eine nach unten und eine nach oben gerichtete Leitfläche als Teil der Begrenzung aufeinanderfolgender Ausströmkanäle, wobei die Leitelemente selbst zwischen den Leitflächen eine geringe und im wesentlichen gleichbleibende Materialstärke aufweisen können.

Für eine klare Vorgabe von Ausströmkanälen sind die Leitelemente vorteilhafterweise in Hauptströmungsrichtung überlappend ineinander gesetzt, wobei vorzugsweise das Maß der Überlappung zwischen 10% und 80%, insbesondere zwischen 25% und 70% der Höhe der Leitelemente liegt.

Eine erste bevorzugte Ausführungsform sieht vor, die Leitelemente kegelstumpfförmig auszubilden, wobei sich vorzugsweise an die untere breite Basis der Kegelstümpfe nach außen weisende im wesentlichen horizontale ebene ringförmige Prallplatten anschließen, welche die beschriebene vorteilhafte Richtungsumlenkung im Verlauf der Strömungskanäle bewirken. Eine bevorzugte Abwandlung dieser Ausbildungsform sieht vor, die Richtungsumlenkung innerhalb der Strömungskanäle durch im radialen Querschnitt kontinuierlich gekrümmte Verläufe der Leitelemente zu erreichen, wobei die Krümmung bevorzugt nicht einem Kreisbogen mit einheitlichem Krümmungsradius folgt, sondern ähnlich einem parabolischen oder hyperbolischen Kurvenverlauf eine Änderung des Krümmungsradius aufweist.

Für den Aufbau der Vorrichtung mit einer Mehrzahl von Leitelementen können die Leitelemente selbst bereits Abstands- und Befestigungselemente zum Zusammenbau ohne Hilfskonstruktionen aufweisen, es kann jedoch auch eine zentrale und/oder eine am äußeren Rand ansetzende Trägerkonstruktion, welche jedoch die Fluidströmung nicht nennenswert behindern soll, zur Halterung der Leitelemente eingesetzt werden.

In einem Speicherbehälter können mehrere der erfindungsgemäßen Vorrichtungen nebeneinander angeordnet sein. Dabei können insbesondere auch Vorrichtungen mit nach oben gerichteter Hauptströmung und Vorrichtungen mit nach unten gerichteter Hauptströmung in einem Speicherbehälter kombiniert sein. Bei einer Vorrichtung mit nach unten gerichteter Hauptströmung kann insbesondere auch am oben liegenden Anfang des Hauptstromkanals eine Kaltfluidquelle eines extern geschlossenen Kreislaufs, beispielsweise ein Rücklauf eines Verbraucherkreislaufs oder ein Wärmetauscher zur Entnahme von Wärmeenergie angeordnet sein. Das kühlere Fluid sinkt dann im Hauptstromkanal ab, bis es eine Höhe gleicher Umgebungsdichte erreicht und in dieser Höhe dann radial ausströmt.

Die Erfindung ist nachfolgend noch anhand von bevorzugten Ausführungsbeispielen unter Bezugnahme auf die Abbildungen eingehend erläutert. Dabei zeigt:
- Fig. 1: eine erste Ausführungsform von Leitelementen
- Fig. 2: eine weitere bevorzugte Ausführungsform von Leitelementen
- Fig. 3: eine Anordnung von zwei erfindungsgemäßen Vorrichtungen in einem Speicherbehälter

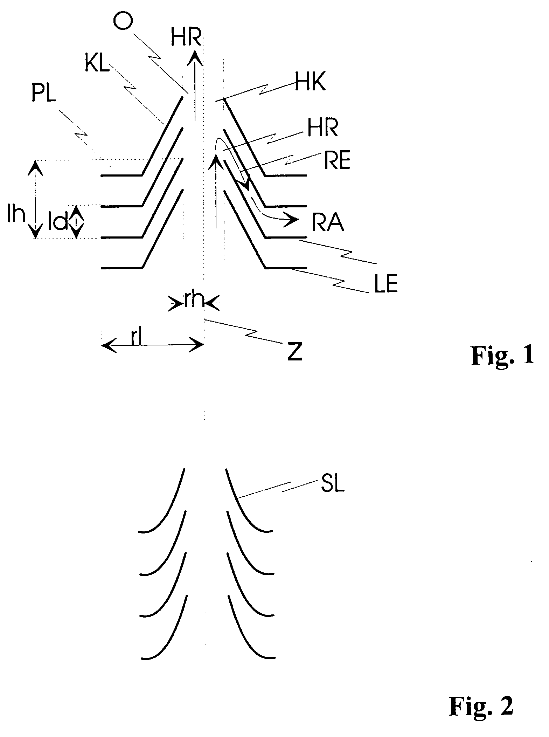

In Fig. 1 sind mehrere in vertikaler Richtung aufeinanderfolgende und in dieser Richtung überlappend ineinandergesetzte Leitelemente LE skizziert, welche rotationssymmetrisch ausgebildet und konzentrisch zu einer vertikalen Kanalachse Z angeordnet seien. Die Leitelemente sind aus einem kegelstumpfförmigen Abschnitt KL und einem sich an die untere Basis der Kegelstumpfform anschließenden, horizontal nach außen weisenden ringförmigen Prallplatten-Abschnitte PL zusammengesetzt. Die kegelstumpfförmigen Abschnitte zeigen innere Öffnungen O, welche einen Hauptstromkanal HK für aufsteigendes Fluid bestimmen und begrenzen. Die Hauptströmungsrichtung im Hautpstromkanal HK ist durch einen mit HR bezeichneten vertikal nach oben gerichteten Pfeil angegeben. Der Radius rh der inneren Öffnungen O der Leitelemente LE ist entsprechend dem jeweiligen Einsatzfall unter Berücksichtigung des zu erwartenden Fluidstroms im Hauptstromkanal zu dimensionieren. Die Leitelemente weisen ein gegenüber den übrigen Dimensionen der Vorrichtung geringe Wandstärke auf, so daß das durch die Vorrichtung beanspruchte Volumen nahezu vollständig für die Fluidströmung zur Verfügung steht.

Der durch die äußeren Berandungen der Prallplatten PL bestimmt der äußere Radius rl der Leitelemente LE bzw. der durch diese gebildete Vorrichtung ist wesentlich größer und beträgt mindestens das 1,5-fache des Radius rh des Hauptstromkanals.

Die Leitelemente LE zeigen in Hauptstromrichtung HR eine Höhe lh und sind um vertikale Abstände ld in Hauptstromrichtung gegeneinander versetzt. Mit ld<lh wird eine gegenseitige Überlappung aufeinanderfolgender Leitelemte in Hauptstromrichtung erreicht und damit den Ausströmkanälen, welche durch gegenüberstehende Flächen aufeinanderfolgender Leitelemente definiert sind, ein deutlicher thermischer Sifoneffekt aufgeprägt. Das durch das Verhältnis von (lh-ld)/lh definierte, auf die Höhe lh der Leitelemente bezogene Maß der Überlappung liegt vorteilhafterweise zwischen 10% und 80%, insbesondere zwischen 25% und 70% der Höhe lh der Leitelemente.

Im Hauptstromkanal aufsteigendes Fluid mit Hauptströmungsrichtung HR erfährt beim Ausströmen durch einen Ausströmkanal, welcher durch gegenüberliegende Leitflächen aufeinanderfolgender Leitelemente bestimmt ist, eine Umkehr der Strömungsrichtung in Richtung einer anfänglichen Ausströmrichtung RE am Anfang des Ausströmkanals. Das Maß der Richtungsumkehr ist größer als 90° und liegt vorzugsweise zwischen 120° und 160°. Im Verlauf des Ausströmkanals erfährt das ausströmende Fluid durch die Prallplattenabschnitte PL eine weitere Richtungsumlenkung in Richtung auf eine annähernde horizontale und damit schichtparallele Strömungsrichtung RA am Ausgang des Strömungskanals. Die Störung der Temperaturschicht und des umgebenden Fluids wird dadurch gering gehalten. Eine weitere Verringerung von Störungen der Schichtung ergibt sich dadurch, daß durch die rotationssymmetrische Ausbildung der Leitelemente und damit auch der Ausströmkanäle sich der Strömungsquerschnitt eines Ausströmkanals vom Eingang bis zum Ausgang des Ausströmkanals vergrößert und sich dabei die Strömungsgeschwindigkeit deutlich reduziert, so daß eine weitgehend wirbelfreie Einströmung in das umgebende Fluid gegeben ist.

Die Ausführungsform der Leitelemente nach Fig. 2 unterscheidet sich von der Ausführungsform nach Fig. 1 im wesentlichen dadurch, daß die Leitelemente nicht durch mit abgestufter Flächenausrichtung ineinander übergehende Abschnitte gebildet sind, sondern im radialen Querschnitt eine kontinuierlich gekrümmte Form mit allmählicher Umlenkung der Strömungsrichtung innerhalb des Verlaufs der Ausströmkanäle zeigen. Hierdurch kann eine weitere Glättung der Strömung ausströmenden Fluids erzielt werden. Die Ausführungen zur Dimensionierung der Leitelemente und der aus diesen zusammengesetzten Vorrichtung wie zu der Skizze nach Fig. 1 gegeben gelten für die Ausführung nach Fig. 2 analog und sind daher nicht im einzelnen wiederholt.

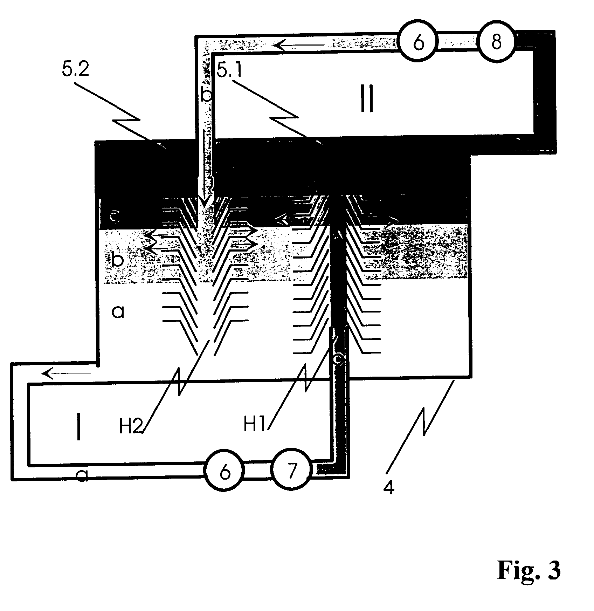

Die Fig. 3 zeigt schematisch eine Anordnung mit 2 erfindungsgemäßen Vorrichtungen in einem Speicherbehälter, wobei eine erste Vorrichtung 5.1 für steigende und eine zweite Vorrichtung 5.2 für sinkende Fluidströme ausgelegt ist.

Der Speicherbehälter 4 kann eine beliebige Form haben und beispielsweise als zylindrischer Tank ausgebildet sein mit einer Höhe, die vorzugsweise größer ist als der Durchmesser des Tanks. Auch viereckige Querschnitte sind möglich und die oberen und unteren Endwände können eben oder gewölbt sein. Der Speicherbehälter 4 kann als Druckspeicher, als druckloser Speicher, als natürlicher Speicher oder als Saisonalspeicher ausgebildet sein.

In dem Speicherbehälter 4 sind eine erste Vorrichtung 5.1 und eine zweite Vorrichtung 5.2 der erfindungsgemäßen Art vorgesehen. Die Speisung der ersten Vorrichtung 5.1 erfolgt von ihrem unteren Ende her mit aufsteigendem Fluidstrom, die Speisung der Vorrichtung 5.2 von deren oberem Ende mit einem sinkenden Fluidstrom. Zur Speisung der Vorrichtungen kommen interne und externe Wärmetauschersysteme, aber auch direkt angeschlossene externe Wärmequellen oder Wärmesenken in Betracht. Als externe Wärmequellen sind insbesondere Solarkollektoren, Wärmepumpen oder brennstoffbetriebene Heizquellen vorgesehen, typische Wärmesenken sind Plattenwärmetauscher für die Erwärmung von Brauchwasser und Heizkreise.

Bei der Einschichtung von zugeführtem Fluid aus dem Hauptstromkanal einer Vorrichtung in das umgebende temperaturgeschichtete Fluid wird der thermische Sifoneffekt genutzt, der eine unerwünschte Vermischung von Wärme und Fluid im Hauptstromkanal mit einer kälteren Fluidschicht außerhalb der Vorrichtung dadurch verhindert, daß das wärmere Fluid aufgrund seiner geringeren Dichte in dem nach unten gerichteten Abschnitt der Ausströmkanäle nicht gegenüber dem kälteren und damit eine höhere Dichte aufweisenden Umgebungsfluid absinken kann.

Der Vorgang der Einschichtung eines erwärmten Fluids in die Schichtstruktur des Fluids im Speicher wird am Beispiel eines externen Heizkreises I beispielsweise eines Solarkollektorkreises, welcher die erste Vorrichtung 5.1 speist, beschrieben. Im Speicherbehälter 4 seien vier Temperaturschichten mit Fluiddichten a, b, c und d mit in dieser Reihenfolge abnehmender Fluiddichte bzw. zunehmender Fluidtemperatur unterschieden. Der externe Kreis I zieht mittels einer Pumpe 6 Fluid mit hoher Dichte aus der Schicht a ab und führt dieses kühle Fluid einem Heizelement 7, beispielsweise einem Solarkollektor zu. Das durch das Heizelement erwärmte Fluid wird zum Speicher zurückgeführt und am unteren Ende der ersten Vorrichtung 5.1 mit einer Temperatur beispielsweise entsprechend der Fluidschicht c eingespeist. Eine Vermischung von zugeführtem Fluid der Dichte c mit im Speicher befindlichem Fluid der Dichten a oder b in den beiden unteren kälteren Schichten findet aufgrund des Sifoneffektes nicht statt. Das zugeführte Fluid der Dichte c strömt daher durch den Förderdruck der Pumpe 6 und durch Auftriebskräfte gegenüber Umgebungsfluid höherer Dichte in dem Hauptströmungskanal H1 der ersten Vorrichtung 5.1 nach oben. Auftriebskräfte sind nur bis zum Erreichen einer bereits eingelagerten Fluidschicht mit gleicher Dichte c existent. Hätte sich beispielsweise im Hauptströmungskanal H1 der ersten Vorrichtung 5.1 zuströmendes Fluid der Dichte c bereits in die Fluidschicht mit der Dichte d hochgeschoben, erführe dieses Fluidvolumen im Hauptstromkanal in dieser Schichthöhe bereits wieder einen durch den Dichteunterschied bedingten Abtrieb. Die wärmere Schicht geringerer Dichte d wirkt daher für das im Kanal aufströmende Fluid abschottend für einen Aufstieg über die Schicht der Dichte c hinaus. Von unten in den Hauptstromkanal nachströmendes Fluid verdrängt notwendigerweise Fluid aus dem Hauptstromkanal nach oben oder nach außen. Der radialen Ausströmung von Fluid aus dem Hauptstromkanal wirkt der beschriebene thermische Sifoneffekt entgegen. Einem beliebigen Aufsteigen von zugeführtem Fluid wirkt der vorstehend genannte Abtriebeffekt in Schichten höherer Temperatur d.h. geringerer Dichte entgegen. Eine Ausströmung findet damit in einem solchen Schichtbereich statt, in welchem sich die beiden Effekte in ihrer gegenläufigen Wirkung kompensieren. Für die Einschichtung von zuströmendem Fluid bedeutet dies, daß Fluid aus dem Hauptstromkanal genau in solche Umgebungsschichten ausströmt, deren Dichte mit der Dichte des Fluids im Hauptstromkanal übereinstimmt bzw. in die Schichtgrenze zwischen einer dichteren Fluidschicht und einer weniger dichten Fluidschicht ausströmt. Durch die bereits beschriebene vorteilhafte Ausführungsform der Leitelemente, welche die Vorrichtung 5.1 enthält, erfolgt eine im wesentliche laminare und damit weitgehend wirbelfreie Einströmung des Fluids aus dem Hauptstromkanal in die umgebende Fluidschichtung, so daß die bestehende Schichtung und die durch den Zustrom evtl. verschobenen Schichtgrenzen weitgehend ungestört horizontal verlaufen können.

Die Einschichtung über die zweite Vorrichtung 5.2 aus einem weiteren externen Kreis II, beispielsweise einem Heizkreis zur Wärmeentnahme für Heizkörper als Wärmesenke 8, in welchem das Fluid wieder über eine Pumpe 6 umgewälzt werde, erfolgt in entsprechender Weise, wobei das zurücklaufende und auf eine Temperatur entsprechend einer Fluiddichte b abgekühlte Fluid von oben in die zweite Vorrichtung 5.2 eingespeist wird und in dessen Hauptstromkanal 2 bis zum Erreichen der eingelagerten Fluidschicht mit der Dichte b absinkt und dort durch die Ausströmkanäle, welche entsprechend der gegenüber der Vorrichtung 5.1 entgegengesetzten Hauptströmungsrichtung gegenüber der ersten Vorrichtung um 180° verdreht verlaufen, in das umgebende Fluid austritt.

Werden anstelle der extern geschlossenen Fluidkreise Wärmezufuhr und/oder Wärmeentnahme durch innerhalb des Behälters am Eingang der Hauptstromkanäle der Vorrichtung angeordnete Wärmetauscher vorgenommen, so wird die Fluidströmung im Hauptstromkanal ausschließlich durch Auftriebskräfte bewirkt.

Die mit der Erfindung erzielten Vorteile bestehen insbesondere darin, daß durch die Ausnutzung des thermischen Sifoneffekts, also primär durch Schwerkrafteinfluß unter Ausnutzung unterschiedlicher Fluiddichten, keine Zusatzenergie zur Einschichtung des Fluids erforderlich ist, und daß es zu keiner wesentlichen Vermischung zwischen dem einzuschichtendem Fluid im Hauptstromkanal und dem bereits eingespeicherten Fluid anderer Dichte kommt. Die Schichtung kann sehr feinstufig vorgenommen werden. Die Geschwindigkeit des Fluidstroms am Ausgang der Ausströmkanäle kann stark reduziert werden, so daß eine wirbelarme, weitgehend laminare Einströmung und damit eine präzise Schichtung des Fluids möglich ist. Ein weiterer wichtiger Vorteil liegt darin, daß die Vorrichtung ohne mechanisch bewegliche Teile sowohl für aufsteigende als auch für absinkende Fluidströme einsetzbar ist. Weiterhin erfolgt die Einschichtung selbstregelnd. Die Vorrichtung ist grundsätzlich zur Einschichtung jeder Art von Fluiden geeignet.

Die Erfindung ermöglicht eine kostengünstige Massenproduktion und den Einsatz vor allem in vielen Bereichen der Heizungs- und Solartechnik. Hierbei können Behälter und Speicher in jeder Größenordnung sowie unter Druck oder drucklos bedient werden. Insbesondere ist die Einsatzmöglichkeit in großen Saisonal- und Jahresspeichern vorteilhaft.

Die Erfindung ist nicht auf die beschriebenen bevorzugten Ausführungsbeispiele beschränkt, sondern im Rahmen fachmännischen Könnens auf mancherlei Weise abwandelbar. Insbesondere sind für die Führung externer Kreise eine Vielzahl von Kombinationen von Anordnungen abführender und zuführender Leitung bekannt. Die Zuführung erwärmten Fluids erfolgt nicht notwendiger Weise von unten, die Zuführung abgekühlten Fluids nicht notwendiger Weise von oben. Die Ausströmkanäle können auch so gestaltet sein, daß die Umlenkung der Strömungsrichtung erst vom Hauptstromkanal beabstandet erfolgt und der Zwischenabschnitt der Ausströmkanäle bis dorthin horizontal oder auch aufsteigend verlaufen kann. Die Austrittsöffnung der Ausströmkanäle liegt aber vollständig unterhalb der zugehörigen Eintrittsöffnungen.

## Patentansprüche

1. Vorrichtung zur vertikalen Temperaturschichtung eines Fluids in einem Speicher mit einem vertikalen Hauptstromkanal vorgegebener Hauptströmungsrichtung, von welchem eine Mehrzahl von seitlichen Auslässen eine Verbindung zu dem umgebenden Fluid herstellen, dadurch gekennzeichnet, daß die Auslässe als Ausströmkanäle ausgebildet sind und eine Richtungsumkehr von mehr als 90° für seitlich aus dem Hauptstromkanal ausströmendes Fluid bewirken.

2. Vorrichtung nach Anspruch 1, dadurch gekennzeichnet, daß der äußere Radius (rl) der Ausströmkanäle mindestens gleich dem 1,5-fachen des Radius (rh) des Hauptstromkanals ist.

3. Vorrichtung nach Anspruch 1 oder 2, dadurch gekennzeichnet, daß der Strömungsquerschnitt der Strömungskanäle radial zunimmt.

4. Vorrichtung nach einem der Ansprüche 1 bis 3, dadurch gekennzeichnet, daß die Ausströmkanäle in ihrem Verlauf die Strömungsrichtung von einer anfänglich stärker gegen die horizontale geneigte Richtung (RE) in eine zumindest annähernd horizontale Richtung (RA) umlenken.

5. Vorrichtung nach einem der Ansprüche 1 bis 4, dadurch gekennzeichnet, daß die Umkehr der Strömungsrichtung im Einlaßbereich der Ausströmkanäle zwischen 120° und 160° gegenüber der Hauptströmungsrichtung (HR) liegt.

6. Vorrichtung nach einem der Ansprüche 1 bis 5, gekennzeichnet durch eine Mehrzahl von in Hauptströmungsrichtung aufeinanderfolgenden und beabstandeten Leitelementen (LE).

7. Vorrichtung nach Anspruch 6, dadurch gekennzeichnet, daß der Hauptstromkanal (HK) durch innere Öffnungen (O) der Leitelemente gebildet ist.

8. Vorrichtung nach Anspruch 6 oder 7, dadurch gekennzeichnet, daß die Ausströmkanäle durch gegenüberliegende Flächen aufeinanderfolgender Leitelemente gebildet sind.

9. Vorrichtung nach einem der Ansprüche 6 bis 8, dadurch gekennzeichnet, daß die Leitelemente rotationssymmetrisch bezüglich der Achse (Z) des Hauptstromkanals sind.

10. Vorrichtung nach einem der Ansprüche 6 bis 9, dadurch gekennzeichnet, daß die Leitelemente in Hauptströmungsrichtung (HR) überlappen.

11. Vorrichtung nach Anspruch 10, dadurch gekennzeichnet, daß die Überlappung zwischen 10% und 80% der Höhe (hl) der Leitelemente beträgt.

12. Vorrichtung nach einem der Ansprüche 6 bis 11, dadurch gekennzeichnet, daß die Leitelemente kegelstumpfförmig ausgebildet sind.

13. Vorrichtung nach Anspruch 14, gekennzeichnet durch im wesentlichen horizontal ausgerichtete Prallplatten am unteren Rand der Leitelemente.

14. Vorrichtung nach einem der Ansprüche 6 bis 12, dadurch gekennzeichnet, daß die Leitelemente einen im Querschnitt gekrümmten Verlauf aufweisen.
